# EUROPÄISCHE PATENTSCHRIFT

(11) **EP 3 502 215 B1**
(45) Veröffentlichungstag und Bekanntmachung des Hinweises auf die Patenterteilung: **26.02.2020**
(21) Anmeldenummer: 17209709.9
(22) Anmeldetag: 21.12.2017
(51) Int. Cl.: C10L 1/12, C10L 1/198, C10L 10/02, C10L 1/185, F02M 25/03, F02B 47/02, F02B 47/04, F02M 25/028

(54) **REDUKTION DER SCHADSTOFFEMISSION VON VERBRENNUNGSMOTOREN**
REDUCTION OF POLLUTANT EMISSIONS FROM COMBUSTION ENGINES
RÉDUCTION D'ÉMISSION DE SUBSTANCES POLLUANTES ÉMANANT DE MOTEURS À COMBUSTION INTERNE

(43) Veröffentlichungstag der Anmeldung: 26.06.2019
(73) Patentinhaber: Kief, Horst, 67069 Ludwigshafen (DE); Kief, Thorsten, 67227 Frankenthal (DE)
(72) Erfinder: Kief, Horst, 67069 Ludwigshafen (DE); Kief, Thorsten, 67227 Frankenthal (DE)
(74) Vertreter: Zellentin & Partner mbB Patentanwälte

(56) Entgegenhaltungen:
- WO-A1-2010/112158
- WO-A1-2016/177544
- CN-A- 104 559 237
- DE-A1- 19 843 380
- US-A1- 2013 337 712
- MOHSEN ADELI ET AL: "Hyperbranched poly(citric acid) and its application as anticancer drug delivery system", JOURNAL OF APPLIED POLYMER SCIENCE, Bd. 129, Nr. 6, 15. September 2013 (2013-09-15), Seiten 3665-3671, XP055473608, ISSN: 0021-8995, DOI: 10.1002/app.39028

## Beschreibung

Die vorliegende Erfindung betrifft ein Verfahren zur Reduktion der Schadstoffemission von Verbrennungsmotoren, ein Additiv mit welchem die Schadstoffemission reduziert werden kann, sowie dessen Verwendung zur Reduktion der Schadstoffemission.

Neben dem eindeutigen Nachweis der Veränderung des Klimas durch zunehmende Erwärmung, u.a. bedingt durch den CO₂-Ausstoß bei der Oxidation fossiler Brennstoffe, wird die Umwelt darüber hinaus beim Dieselmotor durch Fein- und Feinststaub sowie durch Stickoxide belastet. Die Reduzierung dieser Schadstoffe durch Partikelfilter zeigt die Bedeutung der Schademissionen. Der ideale Weg wäre die vollständige Verbrennung der fossilen Brennstoffe direkt im Energiegewinnungsprozess und nicht die nachträgliche Beseitigung im Abgas. Der Vorteil läge nicht nur in der Reduktion der Schademissionen, sondern auch in der zusätzlichen Energiegewinnung und damit Verminderung des Kraftstoffverbrauchs und damit letztendlich auch in der Reduktion der CO₂-Emission.

Lösungen dieses Problems wurden bereits in vielfältiger Weise aufgezeigt. Beispielsweise beschreibt WO 00/17290 A1 Glyoxal oder dessen Acetale bzw. Hemiacetale als Kraftstoffadditiv. Langzeitbeobachtungen zeigten jedoch, dass die Reproduzierbarkeit der dort offenbarten Ergebnisse relativ großen Schwankungen unterlag und darüber hinaus durch Phasentrennung, die in einigen Fällen erst nach Wochen auftrat, Einspritzpumpen Schäden nahmen. Die Phasentrennung trat dabei nicht nur bei der wässrigen Phase des Glyoxals in Verbindung mit den dort verwendeten Emulgatoren auf, sondern auch bei den verwendeten Acetalen, was zunächst überrascht, da Acetale gemeinhin als kohlenwasserstofflöslich gelten. Das Verfahren war daher trotz eindeutiger Erfolge auf den Schadstoffausstoß nicht brauchbar.

In der WO 2010/112158 A1 werden Citronensäureester als Treibstoffersatz oder -zusatz beschrieben, die eine verringerte Rußbildung erreichen sollen. Die Verringerung der Schadstoffemission wird aber nicht exakt nachvollziehbar offenbart. Der Einsatz von Citronensäureestern als Treibstoffersatz oder als Zusatz in den für wirksam gehaltenen Megen von 10 % dürfte aus Preisgründen nur schwer durchsetzbar sein.

Es besteht daher die Aufgabe, die Schadstoffemission zu verringern. Überraschend wurde nun gefunden, dass die Zufuhr eines Additivs enthaltend ein Polymerisat aus Citronensäure und Glycerin, also einen verzweigten Polyester, in den Verbrennungsraum eines Motors die Schadstoffemission drastisch senkt.

Die obige Aufgabe wird daher durch ein Verfahren zur Senkung des Schadstoffausstoßes bei Verbrennungsmotoren gelöst, bei dem als Additiv eine wässrige Lösung enthaltend ein Polymerisat aus Citronensäure und Glycerin in den Verbrennungsraum des Motors zugeführt wird. Die Aufgabe wird auch durch ein Additiv zur Reduzierung der Schadstoffemission von Verbrennungsmotoren bestehend aus einer wässrigen Lösung eines Polymerisat aus Citronensäure und Glycerin sowie Glyoxal gelöst, sowie durch die Verwendung eines Polymerisat aus Citronensäure und Glycerin zur Reduktion der Schadstoffemission. In einer bevorzugten Ausführungsform wird das Polymerisat aus Citronensäure und Glycerin, kurz Citronensäurepolymerisat, mit wässrigem Glyoxal kombiniert, indem entweder Glyoxal in dem Additiv enthalten ist und/oder wässrige Glyoxal-Lösung zusätzlich zugeführt wird.

Das Verfahren schlägt also die Anwendung von Citronensäurepolymerisat oder von einer Kombination aus Citronensäurepolymerisat und Glyoxal in wässriger Lösung zur Senkung des Schadstoffausstoßes von Verbrennungsmotoren vor. Das Additiv kann sowohl über den Ansaugtrakt angesaugt, als auch direkt in den Verbrennungsraum eingespritzt werden. Der wichtige Unterschied zu den bisher vorgeschlagenen Kraftstoffadditiven liegt darin, dass die Substanzen nicht mehr dem Kraftstoff vorab zugefügt werden.

Mit Verbrennungsmotor sind hier vor allem Diesel- und Ottomotoren gemeint, aber auch alle anderen Motoren, z.B. Turbinen, die durch Verbrennung von Kohlenwasserstoffen und/oder deren Ersatzstoffen wie Biodiesel betrieben werden.

Das Polymerisat aus Citronensäure und Glycerin ist von eindeutigem Vorteil auf die Einspritzpumpe, da es eine hohe Viskosität hat und von gelartiger Konsistenz ist. Damit wird eine Schonung der beweglichen Teile erreicht. Das Polymerisat selbst kann in beliebiger wässriger Lösung verwendet werden und lässt sich daher auch ohne Schwierigkeit mit der wässrigen Glyoxal-Lösung mischen.

Ein weiterer Vorteil ist, dass durch die vollständigere Verbrennung der Kraftstoffverbrauch gesenkt und/oder die Leistung gesteigert werden kann.

Das erfindungsgemäße Verfahren hat außerdem den Vorteil, dass bei Einspritzung in den Verbrennungsraum die wässrige Lösung den Kühlungseffekt im Verbrennungsprozess nachvollzieht.

Das Glyoxal als Radikalinduktor beschleunigt den Verbrennungsprozess katalytisch. Da wässrige Glyoxal-Lösungen stabil sind, werden keine emulgierenden Zusätze benötigt. Durch die Kombination des Glyoxal mit dem Citronensäurepolymerisat lassen sich Werte in der Minderung der Schadstoffemissionen erzielen, die bislang unbekannt waren.

Ein weiterer Vorteil der Erfindung ist, dass die beiden Komponenten des Additivs preiswert und leicht zugänglich sind. Wässrige Glyoxal-Lösung ist ein Handelsprodukt. Das Citronensäurepolymerisat lässt sich aus handelsüblicher Citronensäure unter Zugabe von Glycerin und Erhitzung auf 90 bis 150 °C, z.B. durch Mikrowellen, ohne großen Aufwand herstellen. Üblicherweise werden Citronensäure und Glycerin im Gewichtsverhältnis von 1:1 bis 10:1, bevorzugt von 1:1 bis 5:1 und insbesondere von etwa 2:1 eingesetzt. In der Regel dauert die Umsetzung von 30 g Citronensäure und 15 g Glycerin bei einer Mikrowellenleistung von 800 W nur 1 bis 5 Minuten. Eine mögliche Struktur des Polymerisats ist in der folgenden Formel 1 dargestellt.

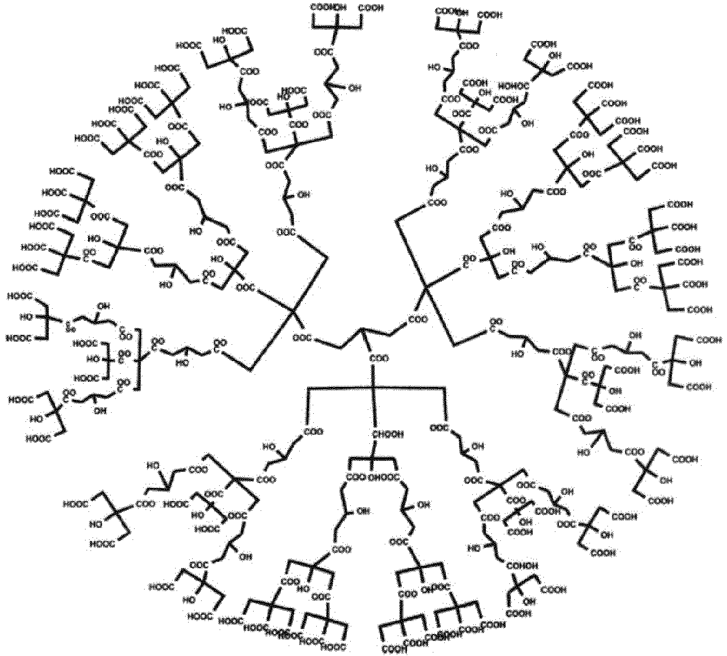

Polymere aus Citronensäure und Glycerin sind an sich bekannt. Die US 2013/337712 A1 beschreibt Polyester aus mindestens dreiwertigen Carbonsäuren und mehrwertigen Alkoholen, u.a. aus Citronensäure und Glycerin, als Bindemittel. Der Artikel Mohsen Adeli et al., "Hyperbranched poly(citric acid) and its applications in anticancer drug delivery systems" betrifft die Verwendung von Polymeren aus Citronensäure und Glycerin für Arzneimittel. In CN 104 559 237 sind Polymere aus Fettsäuren, u.a. Citronensäure, und Glycerin als Fluxmittel für Warmasphalt beschrieben. Mit Verbrennungmotoren haben diese Veröffentlichungen nichts zu tun.

Das Citronensäurepolymerisat weist durch seinen Reichtum an Carbonylgruppen den entscheidenden katalytischen Effekt auf, es ist von gelartiger Konsistenz, ist hydrophil und bindet Feuchtigkeit gut.

Das Polymerisat ist allein oder als Basissubstanz in der Kombination Citronensäurepolymerisat-Glyoxal-Lösung im Luftfilter respektive Ansaugtrakt in besonderem Maße geeignet. Das Citronensäurepolymerisat hat darüber hinaus den Vorteil vollständig untoxisch zu sein.

Aufgrund seiner Funktion als Radikalinduktor ist eine Direkteinspritzung der wässrigen Glyoxal-Lösung in mengenmäßig überwiegendem Anteil in den Brennraum bei plötzlichen Lastwechseln vorzuziehen. Beide Substanzen sowie die Verfahren der Zufuhr in den Ansaugtrakt und in den Brennraum ergänzen sich und es wurde auch gefunden, dass sie sich in ihrer Schadstoffreduzierenden Wirkung summieren.

In einer Ausführungsform wird anstelle der bei Hochleistungsmotoren üblichen Wassereinspritzung in den Verbrennungsraum zur Kühlung das erfindungsgemäße Additiv, Citronensäurepolymerisat und/oder Glyoxal-Lösung direkt eingespritzt. Dies erfolgt mittels derselben Vorrichtung. So lässt sich völlig problemlos eine wässrige Lösung von Citronensäurepolymerisat und/oder von Glyoxal in den Verbrennungsraum des Motors zuführen. Es sind keine prinzipiellen Veränderungen am Motor notwendig.

Von besonderem Vorteil ist es, das Additiv oder Citronensäurepolymerisat dem Verbrennungsprozess dampfförmig zuzuführen, was z.B. durch Einbringen in den Ansaugtrakt ohne großen technischen Aufwand erfolgen kann. Durch Einbringen in den Ansaugtrakt wird das Citronensäurepolymerisat oder Additiv ebenfalls in den Verbrennungsraum des Motors zugeführt, indem es von der angesaugten Verbrennungsluft mitgenommen wird. In einer bevorzugten Variante erfolgt das Einbringen durch Tränken des Luftfilters, da durch die große Oberfläche des Filters die Verdampfung der Lösung besonders effektiv und der technische Aufwand geradezu bestechend gering ist. Der Verdampfungsprozess kann außerdem durch eine Ultraschallquelle gefördert und reguliert werden.

Es ist von besonderem Vorteil die Zufuhr des Citronensäurepolymerisats, insbesondere dampfförmig, in den Ansaugtrakt und die Einspritzung der wässrigen Additiv- oder Glyoxal-Lösung in den Verbrennungsraum zu kombinieren. Dabei kann beispielsweise durch Erhöhung des Wasseranteils der Kühlungseffekt auf den Verbrennungsvorgang erhöht werden. Es kann entweder jeweils dasselbe Additiv oder vorzugsweise ein im Gehalt an Glyoxal und Citronensäurepolymerisat angepasstes Additiv verwendet werden, insbesondere auch die Kombination der Zufuhr von Citronensäurepolymerisat in den Ansaugtrakt und von Glyoxal-Lösung in den Verbrennungsraum. In einer bevorzugten Ausführungsform wird eine konstante Zugabe von Citronensäurepolymerisat oder Glyoxal-CitronensäurepolymerisatLösung über den Luftfilter als katalytischer Basisprozess mit einer lastabhängig gesteuerten Einspritzung einer wässrigen Glyoxal- oder Glyoxal-Citronensäurepolymerisat-Lösung direkt in den Verbrennungsraum kombiniert und somit die Schadstoffemission lastabhängig reguliert.

Es ist ebenfalls denkbar, eine ganz eigene Vorrichtung zur Zufuhr des Additivs zu schaffen. Dies wird jedoch nur bei Motorneuentwicklungen wirtschaftlich sein, nachträgliche Umbauten sind in der Regel zu teuer. Technisch spricht jedoch nichts dagegen.

Die Zufuhrmenge an Citronensäurepolymerisat und Glyoxal ist sehr variabel. Es hat sich jedoch bewährt, wenn das Additiv bei direkter Einbringung in den Verbrennungsraum Glyoxal enthält und sogar überwiegend aus der Glyoxal-Lösung besteht. Das heißt, das Verhältnis von Glyoxal zu Polymerisat aus Citronensäure und Glycerin sollte zweckmäßig im Bereich von 10:1 bis 1:1 liegen. Bei Einbringung in den Ansaugtrakt sollte das Additiv dagegen vorzugsweise ganz oder überwiegend aus dem Citronensäurepolymerisat bestehen. Demgemäß eignen sich Verhältnisse von Glyoxal zu Polymerisat aus Citronensäure und Glycerin im Bereich von 1:1 bis 1:10 in dem Additiv.

Insgesamt liegt der Einsatz des Citronensäurepolymerisats oder des erfindungsgemäßen Additivs (beide Komponenten in Summe) im unteren Promillebereich, typischerweise reichen 0,1-2 Promille bezogen auf den Kraftstoff aus, bevorzugt sind 0,5 bis 1 Promille, bezogen auf das Volumen.

Erfolgt eine Zufuhr sowohl direkt durch Einspritzen in den Verbrennungsraum als auch durch Einbringen in den Ansaugtrakt, so kann auch Glyoxallösung eingespritzt und Citronensäurepolymerisatlösung auf das Luftfilter aufgebracht werden. Die Zufuhr der Komponenten kann in dieser Ausführungsform also getrennt erfolgen.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Volumen, im Zweifel auf das Gesamtvolumen der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Zur Herstellung des Citronensäurepolymerisats wurden 30 g Citronensäuremonohydrat mit 15 g Glycerin in einem Glas mit Hilfe eines motorisch betriebenen Quirls verrührt und in einen Haushalts-üblichen Mikrowellenofen (hier Modell Koenic KMW 4441 DB) mit einer nominellen Ausgangsleistung von 1450 Watt und Frequenz von 2450 MHz gestellt. Die Mischung wurde 2 Minuten lang erhitzt. Dabei konnte die Bildung von Wasserdampf am oberen Glasrand beobachtet werden. Nach dem Abkühlen wurde eine klare, zähflüssige Masse erhalten, die sich leicht in Wasser löste.

### Beispiel 2

Bei einem ersten Versuch an einem Mini Cooper D wurde das Luftfilter mit 40ml einer 50%igen Lösung aus Citronensäurepolymerisat und Wasser (PCS) getränkt, und zwar vor Kilometer 106 411 und vor Kilometer 106 930. Zusätzlich wurde vor Kilometer 106 943 anstatt Wasser 20ml 40%ige Glyoxallösung (GR) im Luftfilter zugefügt. Bei 35l Tankinhalt entspricht dies einer Additivmenge von 0,5 Promille aktive Substanz pro 1l Kraftstoff vor Kilometer 106411 und 0,5 Promille vor Kilometer 106930 plus 8ml Gyoxal entsprechend 0,2 Promille pro 1l Diesel vor Kilometer 106943.

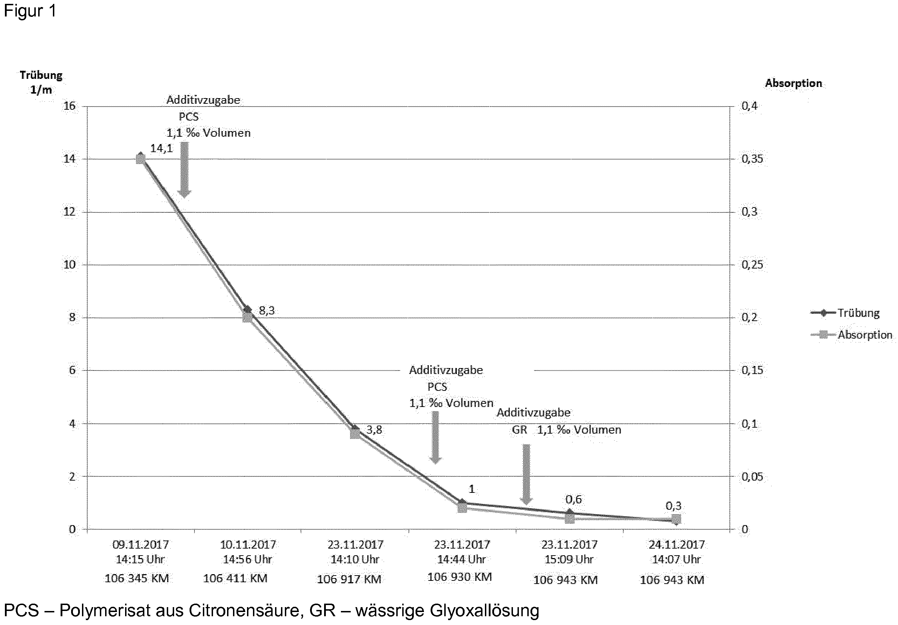

In Figur 1 sind die Ergebnisse der Messung von Trübung in 1/m und Absorption in % dargestellt. Gemessen wurde nach dem amtlichen, deutschen Messverfahren für die Abgasuntersuchung. Sowohl die Trübung als auch die Absorption sind ein Maß für den Gehalt an Rußpartikeln im Abgas. Ausgehend von einer anfänglichen Trübung von 14,1 1/m konnte durch die Tränkung des Luftfilters mit Citronensäurepolymerisat entsprechend dem erfindungsgemäßen Verfahren eine Reduktion auf 1 1/m erreicht werden. Die zusätzliche Zugabe von Glyoxal-Lösung führte zu einer weiteren Reduktion auf 0,3 1/m. Wie die Messergebnisse zeigen, lassen sich also mit dem erfindungsgemäßen Verfahren insbesondere in der Anwendung der Kombination von Citronensäurepolymerisat mit Glyoxal Minderungen der Schadstoff-Emissionen erzielen, die bislang unbekannt waren. Es wurden Reduzierungen des Feinstaubs von annähernd 100% erzielt.

### Beispiel 3

In einem zweiten Versuch an einem VW Touareg R50 wurden zunächst 100ml einer 40%igen Glyoxal-Lösung in die beiden Luftfilter gegeben (vor KM 148 706). Gemäß der Erfindung wurden außerdem 100ml einer 50%igen Citronensäurepolymerisatlösung in die beiden Luftfilter gegeben. Bei einer Tankfüllung von 80l Diesel entspricht die Zugabe von 100ml Glyoxal-Lösung und 100ml Citronensäurepolymerisatlösung einer Additivmenge von 0,5 Promille in einem Liter Diesel. Vor der 4. Kontrolle waren es 0,65 Promille aktive Substanz pro 1l Diesel (Tankinhalt 76l Diesel) wobei angenommen wird, dass über den Ansaugtrakt nur ein Bruchteil in den Brennraum gelangt, wahrscheinlich im Mikrogrammbereich.

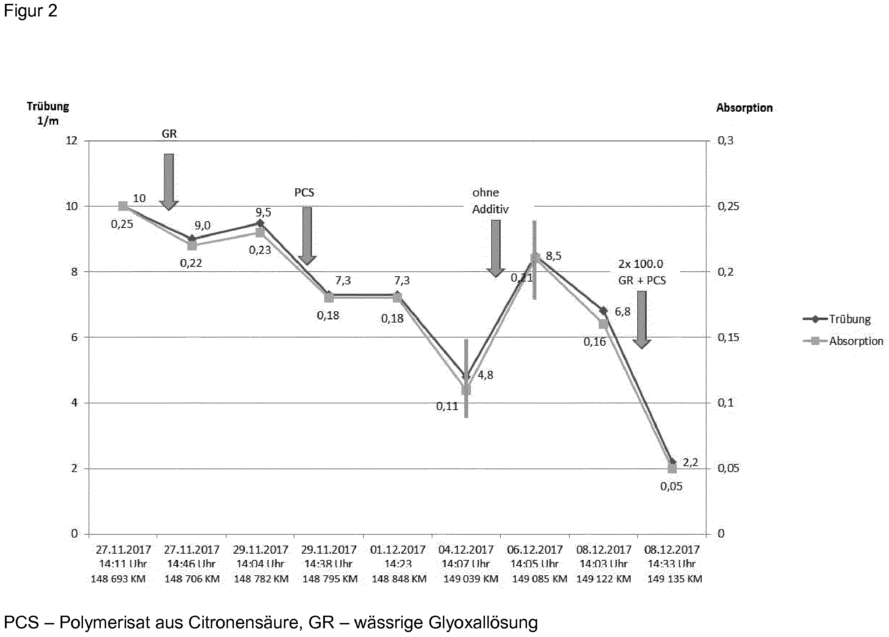

In Figur 2 sind die gemessenen Werte für Trübung und Absorption dargestellt. Man erkennt, dass wieder sehr deutliche Schadstoffreduzierungen erreicht wurden. Bei der zum Vergleich erfolgten Zugabe von Glyoxal-Lösung alleine ergab sich eine Reduktion der Trübung von 10 1/m auf 9 1/m. Die zusätzliche Zugabe von Citronensäurepolymerisatlösung erreichte eine Verringerung auf 4,8 1/m. Es ist jedoch anzunehmen, dass bei Zugabe des Citronensäurepolymerisat das Glyoxal bereits verbraucht war (Anstieg der Trübung auf 9,5 1/m bei Kilometer 148 782). Die Zugabe der Kombination aus Glyoxal- und Citronensäurepolymerisatlösung vor Kilometer 149 135 führte zu einer drastischen Reduktion der Trübung auf 2,2 1/m.

Der Feinstaub bei Dieselmotoren besteht zu einem erheblichen Anteil aus Ruß, einem Energieträger, der mithin nicht genutzt wird. Die extreme Absenkung des unverbrannten Materials lässt rein rechnerisch den Schluss einer Verbrauchssenkung zu. Diesbezügliche Hinweise ließen sich in Erfahrungswerten an 7 verschiedenen Fahrzeugen finden (BMW 530 Diesel, BMW 750 12 Zylinder, 3 Audi AG Diesel verschiedener Baureihen, Mini Cooper D, VW Touareg R50). Es wurden Verbrauchssenkungen von 12,5 bis 20 % festgestellt, je nach Fahrweise und Fahrzeug, woraus sich wiederum eine Absenkung des CO₂ Ausstoßes und durch das Zusatzangebot am Engergieträger, hier Kohlestaub, eine Leistungssteigerung ableiten lässt.

## Patentansprüche

1. Verfahren zur Reduktion der Schadstoffemission von Verbrennungsmotoren, **dadurch gekennzeichnet, dass** eine wässrige Lösung enthaltend ein Polymerisat aus Citronensäure und Glycerin als Additiv dem Verbrennungsraum des Motors zugeführt wird.

2. Verfahren gemäß Anspruch 1, **dadurch gekennzeichnet, dass** das Additiv zusätzlich Glyoxal enthält.

3. Verfahren gemäß Anspruch 1 oder 2, **dadurch gekennzeichnet, dass** das Additiv durch ein Hochdruckpumpensystem direkt in den Verbrennungsraum eingespritzt wird.

4. Verfahren gemäß Anspruch 2 und 3, **dadurch gekennzeichnet, dass** das Volumenverhältnis von Glyoxal zu Polymerisat aus Citronensäure und Glycerin im Bereich von 10:1 bis 1:1 liegt.

5. Verfahren gemäß einem der Ansprüche 1 bis 4, **dadurch gekennzeichnet, dass** der Kühlungsbedarf des Motors durch Variation des Wasseranteils des Additivs geregelt wird.

6. Verfahren gemäß Anspruch 1 oder 2, **dadurch gekennzeichnet, dass** das Additiv in den Ansaugtrakt des Motors eingebracht, vorzugsweise im Ansaugtrakt, vorzugsweise über das damit getränkte Luftfilter, verdampft wird.

7. Verfahren gemäß Anspruch 2 und 6, **dadurch gekennzeichnet, dass** das Volumenverhältnis von Glyoxal zu Polymerisat aus Citronensäure und Glycerin im Bereich von 1:10 bis 1:1 liegt.

8. Verfahren gemäß Anspruch 2, **dadurch gekennzeichnet, dass** direkt in den Verbrennungsraum wässrige Glyoxallösung und in den Ansaugtrakt wässrige Lösung von Polymerisat aus Citronensäure und Glycerin zugeführt wird.

9. Verfahren gemäß Anspruch 8, **dadurch gekennzeichnet, dass** die wässrige Glyoxallösung durch ein Hochdruckpumpensystem in den Verbrennungsraum eingespritzt wird und/oder das Polymerisat aus Citronensäure und Glycerin in dem Ansaugtrakt, vorzugsweise über das damit getränkte Luftfilter, verdampft wird.

10. Additiv zur Reduzierung der Schadstoffemission von Verbrennungsmotoren bestehend aus einer wässrigen Lösung von Glyoxal und einem Polymerisat aus Citronensäure und Glycerin.

11. Additiv gemäß Anspruch 10, **dadurch gekennzeichnet, dass** für eine direkte Einspritzung in den Verbrennungsraum des Motors das Volumenverhältnis von Glyoxal zu Polymerisat aus Citronensäure und Glycerin im Bereich von 10:1 bis 1:1 liegt.

12. Additiv gemäß Anspruch 10, **dadurch gekennzeichnet, dass** für eine Einbringung in den Ansaugtrakt das Volumenverhältnis von Glyoxal zu Polymerisat aus Citronensäure und Glycerin im Bereich von 1:10 bis 1:1 liegt.

13. Verwendung eines Additivs bestehend aus einer wässrigen Lösung enthaltend ein Polymerisat aus Citronensäure und Glycerin zur Reduktion der Schadstoffemission von Verbrennungsmotoren, **dadurch gekennzeichnet, dass** das Additiv dem Verbrennungsraum des Motors zugeführt wird und nicht dem Kraftstoff beigemischt wird.

14. Verwendung gemäß Anspruch 13, **dadurch gekennzeichnet, dass** das Additiv zusätzlich Glyoxal enthält.

15. Verwendung gemäß Anspruch 13, **dadurch gekennzeichnet, dass** wässrige Glyoxallösung direkt in den Verbrennungsraum, vorzugsweise durch ein Hochdruckpumpensystem, und wässrige Lösung von Polymerisat aus Citronensäure und Glycerin in den Ansaugtrakt, vorzugsweise über das damit getränkte Luftfilter verdampft, zugeführt wird.

## Claims

1. Method for reducing the pollutant emissions from combustion engines, **characterised in that** an aqueous solution containing a polymerisate made of citric acid and glycerine as an additive is supplied to the combustion chamber of the engine.

2. Method according to claim 1, **characterised in that** the additive also contains glyoxal.

3. Method according to claim 1 or 2, **characterised in that** the additive is injected directly into the combustion chamber by a high-pressure pump system.

4. Method according to claim 2 and 3, **characterised in that** the volume ratio of glyoxal to polymerisate made of citric acid and glycerine ranges from 10:1 to 1:1.

5. Method according to one of claims 1 to 4, **characterised in that** the cooling requirement of the engine is regulated by varying the amount of water of the additive.

6. Method according to claim 1 or 2, **characterised in that** the additive is introduced into the suction tract of the engine, preferably is evaporated in the suction tract, preferably via the air filter being soaked with it.

7. Method according to claim 2 and 6, **characterised in that** the volume ratio of glyoxal to polymerisate made of citric acid and glycerine ranges from 1:10 to 1:1.

8. Method according to claim 2, **characterised in that** aqueous glyoxal solution is supplied directly into the combustion chamber and aqueous solution of polymerisate made of citric acid and glycerine is supplied into the suction tract.

9. Method according to claim 8, **characterised in that** the aqueous glyoxal solution is injected into the combustion chamber by a high-pressure pump system and/or the polymerisate made of citric acid and glycerine is evaporated in the suction tract, preferably via the air filter being soaked with it.

10. Additive for reducing the pollutant emissions of combustion engines consisting of an aqueous solution of glyoxal and a polymerisate made of citric acid and glycerine.

11. Additive according to claim 10, **characterised in that** the volume ratio of glyoxal to polymerisate made of citric acid and glycerine for a direct injection into the combustion chamber of the engine ranges from 10:1 to 1:1.

12. Additive according to claim 10, **characterised in that** the volume ratio of glyoxal to polymerisate made of citric acid and glycerine for an introduction into the suction tract ranges from 1:10 to 1:1.

13. Use of an additive consisting of an aqueous solution containing a polymerisate made of citric acid and glycerine for reducing the pollutant emissions of combustion engines, **characterised in that** the additive is supplied to the combustion chamber of the engine and is not admixed to the fuel.

14. Use according to claim 13, **characterised in that** the additive further contains glyoxal.

15. Use according to claim 13, **characterised in that** the aqueous glyoxal solution is supplied directly into the combustion chamber, preferably by means of a high-pressure pump system, and aqueous solution of polymerisate made of citric acid and glycerine is supplied into the suction tract, preferably evaporated by the air filter soaked with it.

## Revendications

1. Procédé pour réduire les émissions polluantes des moteurs à combustion interne, **caractérisé en ce qu'**une solution aqueuse contenant un polymérisat d'acide citrique et de glycérol comme additif est introduite dans la chambre de combustion du moteur.

2. Procédé selon la revendication 1, **caractérisé en ce que** l'additif contient en outre du glyoxal.

3. Procédé selon la revendication 1 ou 2, **caractérisé en ce que** l'additif est injecté directement dans la chambre de combustion par un système de pompe à haute pression.

4. Procédé selon les revendications 2 et 3, **caractérisé en ce que** le rapport volumique du glyoxal au polymérisat d'acide citrique et de glycérol est compris entre 10:1 et 1:1.

5. Procédé selon l'une quelconque des revendications 1 à 4, **caractérisé en ce que** le besoin de refroidissement du moteur est commandé en faisant varier la teneur en eau de l'additif.

6. Procédé selon la revendication 1 ou 2, **caractérisé en ce que** l'additif est amené dans le conduit d'admission du moteur, de préférence dans le conduit d'admission, de préférence par l'intermédiaire du filtre à air imprégné de celui-ci, est évaporé.

7. Procédé selon les revendications 2 et 6, **caractérisé en ce que** le rapport volumique du glyoxal au polymérisat d'acide citrique et de glycérol est compris entre 1:10 et 1:1.

8. Procédé selon la revendication 2, **caractérisé en ce qu'**une solution aqueuse de glyoxal est introduite directement dans la chambre de combustion et une solution aqueuse de polymérisat d'acide citrique et de glycérol est introduite dans le conduit d'admission.

9. Procédé selon la revendication 8, **caractérisé en ce que** la solution aqueuse de glyoxal est injectée dans la chambre de combustion par un système de pompe à haute pression et/ou le polymérisat d'acide citrique et de glycérol est évaporé dans le conduit d'admission, de préférence par le filtre à air qui en est imprégné.

10. Additif pour la réduction des émissions polluantes des moteurs à combustion interne, constitué d'une solution aqueuse de glyoxal et d'un polymérisat d'acide citrique et de glycérol.

11. Additif selon la revendication 10, **caractérisé en ce que**, pour l'injection directe dans la chambre de combustion du moteur, le rapport volumique glyoxal/polymérisat d'acide citrique et de glycérol est compris entre 10:1 et 1:1.

12. Additif selon la revendication 10, **caractérisé en ce que**, pour l'introduction dans le conduit d'admission, le rapport volumique du glyoxal au polymérisat d'acide citrique et de glycérol est compris entre 1:10 et 1:1.

13. Utilisation d'un additif constitué d'une solution aqueuse contenant un polymérisat d'acide citrique et de glycérol pour réduire les émissions polluantes des moteurs à combustion interne, **caractérisée en ce que** l'additif est introduit dans la chambre de combustion du moteur et n'est pas ajouté au carburant.

14. Utilisation selon la revendication 13, **caractérisée en ce que** l'additif contient en outre du glyoxal.

15. Utilisation selon la revendication 13, **caractérisée en ce que** la solution aqueuse de glyoxal est introduite directement dans la chambre de combustion, de préférence par un système de pompe à haute pression, et la solution aqueuse de polymérisat d'acide citrique et de glycérol est introduite dans le conduit d'aspiration, de préférence évaporée par le filtre à air qui en est imprégné.
